# EUROPEAN PATENT SPECIFICATION

(11) **EP 0 975 473 B1**
(45) Date of publication and mention of the grant of the patent: **01.08.2001**
(21) Application number: 98919230.7
(22) Date of filing: 07.04.1998
(51) Int. Cl.: B44C 1/22, B44C 5/04, B44F 9/02, B32B 27/30

(54) **COMPOSITE LAMINATE, METHOD FOR DECORATING PANELS WITH THE LAMINATE, AND PANEL OBTAINED BY THE METHOD**
VERBUNDLAMINAT, VERFAHREN ZUM DEKORIEREN VON PLATTEN UNTER VERWENDUNG DES LAMINATES, UND DURCH DAS VERFAHREN HERGESTELLTE PLATTE
LAMINE COMPOSITE, PROCEDE SERVANT A DECORER DES PANNEAUX AVEC CE LAMINE ET PANNEAU OBTENU AU MOYEN DE CE PROCEDE

(30) Priority: 08.04.1997 IT VE970012
(43) Date of publication of application: 02.02.2000
(73) Proprietor: 3B S.p.A., I-31040 Salgareda Treviso (IT)
(72) Inventor: MENEGHIN, Dino, I-31040 Salgareda (IT); LORENZON, Stefano, I-31040 Salgareda (IT)
(74) Representative: Piovesana, Paolo
(86) International application number: EP9802018
(87) International publication number: WO9845129

(56) References cited:
- EP-A- 0 019 221
- DE-A- 4 032 139
- GB-A- 2 034 251
- GB-A- 2 291 007
- US-A- 3 874 966
- US-A- 5 275 862

## Description

The invention relates to a composite laminate, a method for decorating panels with the laminate, and a panel obtained by the method.

Panel decorating methods are known comprising a preliminary stage of pantograph-machining the surface of an MDF substrate to obtain shapes therein corresponding to a predetermined pattern, and a stage in which a thermoplastic laminate cladding sometimes having the colour and graining of wood is applied. The panel prepared in this manner is heated to obtain partial softening of the cladding sheet, which by suitable working adheres to the thus modified surface of the panel.

Other methods have also been proposed using a composite material formed from two different-colour layers of through-coloured thermoplastic material. After being applied to the MDF panel, these are again pantograph-machined to remove the upper layer and reveal the lower layer, which in this manner creates the desired ornamental motif.

GB-A-2.034-251 discloses a board for use in making pictures or designs comprising a base sheet of which one side has a facing covered by tansparent buffer layer which extends over the whole of the facing. The buffer layer is covered by a dense opaque surface which can be scratched off or removed by light surface engraving.

EP-A-0 019 221 discloses a sheet-like material based on a web of paper or plastic film and having a wood grain pattern applied to at least one lateral surface, at least one underlying printed image corresponding to a photographic colour separation of a wood original being directly or indirectly printed on the web, this printed image being masked by a continuous transparent protective layer, and the transparent protective layer bearing a pore structure on the basis of a further colour separation of the wood original.

An object of the invention is to provide an improved composite laminate which by suitable treatment provides a pleasant outer appearance to the panel to which it is applied.

A further object of the invention is to provide a composite laminate which may be applied to panels obtained with traditional pantograph machines.

These and further objects which will be apparent from the ensuing description are attained according to the invention by a therrmoplastic continuous composite laminate, particularly for cladding panels of wooden material, as described in claim 1.

A method for decoratting a panel covered with the composite laminate is claimed in claim 16.

Some preferred embodiments of the invention are described in detail hereinafter by way of non-limiting example with reference to the accompanying drawings, on which:
Figure 1 is a cross-section through a composite laminate usable in the method of the invention,
Figure 2 shows a modification thereof,
Figure 3 shows a further modification thereof, and
Figure 4 shows a further modification thereof.

As can be seen from the figures, the decoration method of the invention uses a composite continuous laminate formed from:
- a lower layer 2 forming a base support and constructed of through-coloured thermoplastic material, such as PVC or polypropylene,
- an intermediate layer 4 of transparent material, also constructed of thermoplastic material, and
- an upper layer 6 of through-coloured material of different colour and/or characteristics from the constituent material of the lower layer. Preferably also this layer consists of PVC or polypropylene.

A layer of primer is applied to the outer surface of the lower layer 2 to facilitate the bonding of the composite laminate to the panel on application.

A layer of transparent material 8, in varnish or sheet form or both, is applied to the outer surface of the upper layer 6. The purpose of the varnish is to provide the product with resistance to scratching and to chemical agents, whereas the purpose of the sheet, in the case of printed products, is to protect the print from abrasion in accordance with DIN 6861.

The thickness of the said layers varies from 0.001 mm to 1 mm.

According to the method of the invention, before or after applying the composite laminate, preferably by glueing and pressing, to a MDF panel which may be flat or shaped, the composite laminate is subjected to localized removal of the upper layer 6 until the transparent layer 4 is reached, so that the person viewing the panel sees cladding having the appearance of the upper layer 6 and, in the regions in which said layer 6 has been removed, the lower layer 2.

The localized removal can be effected by chemical treatment (solvent) or by mechanical machining (scraper or pantograph).

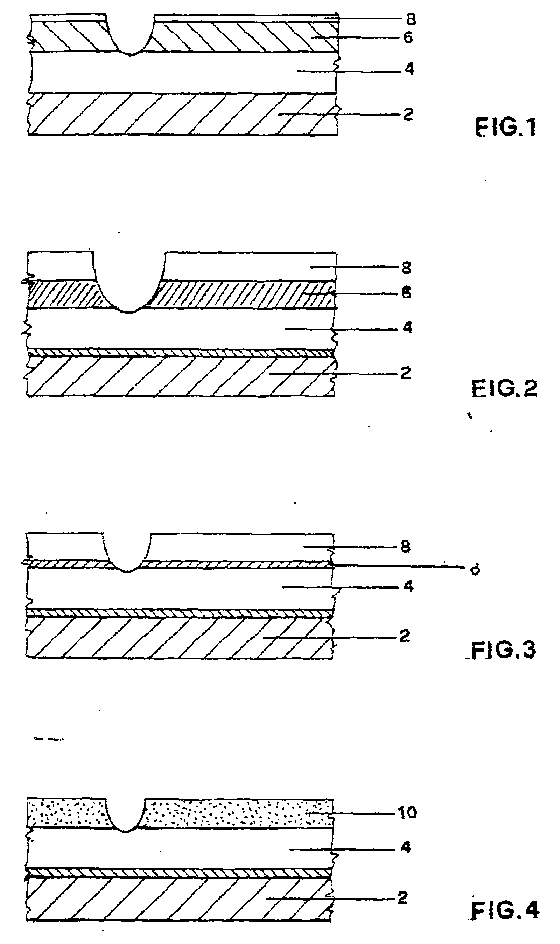

In the embodiment shown in Figure 2 the lower layer or base support 2 has that surface in contact with the intermediate layer 4 printed to display colours and graining reproducing a particular type of wood, the upper layer 6 again being a through-coloured layer of thermoplastic material. In this case, following the localized removal, a panel is seen clad with plastic material which in the removed regions displays the underlying wood-type surface.

In the embodiment shown in Figure 3 the transparent layer 4 has both its surfaces printed in the form of two different types of wood, the upper of these surfaces being covered with a layer of transparent thermoplastic material 8, which is subsequently varnished.

In this case the localized material removal gives the effect of a panel formed from two different types of wood, which overall give the effect on inlaid wood, but produced by an industrial method.

In the embodiment shown in Figure 4, the inner surface of the lower layer or base support 2 is printed, whereas to the upper surface of the transparent layer 4 there is applied a layer of coloured pigmented varnish 10. In this manner, following localized removal, the effect is obtained of an overpainted wooden panel.

## Claims

1. A composite thermoplastic continuous laminate, for cladding flat or shaped panels of wooden material, characterised by comprising a through-coloured lower layer (2), an intermediate layer (4) of transparent material, and a through coloured upper layer (6, 10) of different colour from those of the lower layer.

2. A composite laminate as claimed in claim 1, characterised in that a layer of primer is applied to the outer surface of the lower layer (2) to facilitate its bonding to the panel.

3. A composite laminate as claimed in claim 1, characterised in that the lower layer (2) consist of a PVC layer.

4. A composite laminate as claimed in claim 1, characterised in that the lower layer (2) consist of a polypropylene layer.

5. A composite laminate as claimed in claim 1, characterised in that the upper layer (6, 10) consist of PVC layer.

6. A composite laminate as claimed in claim 1, characterised in that the upper layer (6,10) consist of a polypropylene layer.

7. A composite laminate as claimed in claim 1, characterised in that the transparent layer (4) is constructed of thermoplastic material.

8. A composite laminate as claimed in claim 1, characterised In that the lower layer (2) consists of a sheet of thermodeformable material having its surface printed to display colours and graining which reproduce a particular type of wood.

9. A composite laminate as claimed in claim 1 characterised in that the upper layer consists of a wood printing (6).

10. A composite laminate as claimed in claim 9 characterised in that a transparent protection layer (8) is applied to the upper layer (6, 10).

11. A composite laminate as claimed in claim 10, characterised in that said protection layer (8) is a transparent varnish.

12. A composite laminate as claimed in claim 10, characterised in that said protection layer is a sheet of thermoplastic material.

13. A composite laminate as claimed in claim 10, characterised in that said protection layer (8) is a combination of a sheet of thermoplastic material and a layer of transparent vamish.

14. A composite laminate as claimed in claim 1, characterised in that both surfaces of the intermediate layer (4) are printed in accordance with colours and characteristics of different types of wood.

15. A composite laminate as claimed in claim 1, characterised in that the upper layer is a coloured pigmented varnish (10).

16. A method for decorating flat or shaped panels of wooden material with the thermoplastic composite laminate claimed in one or more of claims 1 to 15, characterised in that after or before said composite laminate has been applied to a panel to be decorated, localised removal of the upper layer is carried out until the transparent intermediate layer (4) is reached.

17. A decorating method as claimed in claim 16, characterised in that said removal is effected by chemical treatment.

18. A decorating method as claimed in claim 16, characterised in that said removal is effected by mechanical machining.

## Patentansprüche

1. Thermoplastisches kontinuierliches Verbundlaminat zur Plattierung von flachen oder geformten Platten aus Holz, dadurch gekennzeichnet, dass es eine farbige untere Schicht (2), eine Zwischenschicht (4) aus durchsichtigem Material und eine farbige obere Schicht (6,10) mit einer zu der unteren Schicht verschiedenen Farbe aufweist.

2. Verbundlaminat nach Anspruch 1, dadurch gekennzeichnet, dass zur Erleichterung der Verbindung mit der Platte auf der äußeren Oberfläche der unteren Schicht (2) eine Grundierung angebracht ist.

3. Verbundlaminat nach Anspruch 1, dadurch gekennzeichnet, dass die untere Schicht (2) aus einer PVC-Schicht besteht.

4. Verbundlaminat nach Anspruch 1, dadurch gekennzeichnet, dass die untere Schicht (2) aus einer Polypropylenschicht besteht.

5. Verbundlaminat nach Anspruch 1, dadurch gekennzeichnet, dass die oberer Schicht (6,10) aus einer PVC-Schicht besteht.

6. Verbundlaminat nach Anspruch 1, dadurch gekennzeichnet, dass die obere Schicht (6,10) aus einer Polypropylenschicht besteht.

7. Verbundlaminat nach Anspruch 1, dadurch gekennzeichnet, dass die transparente Schicht (4) aus thermoplastischen Material hergestellt wird.

8. Verbundlaminat nach Anspruch 1, dadurch gekennzeichnet, dass die untere Schicht (2) aus einer Schicht aus thermoverformbarem Material mit einer bedruckten Oberfläche besteht, wodurch Farben und eine Marmorierung erscheinen, die eine bestimmte Holzart reproduzieren.

9. Verbundlaminat nach Anspruch 1, dadurch gekennzeichnet, dass die obere Schicht aus einem Holzdruck (6) besteht.

10. Verbundlaminat nach Anspruch 9, dadurch gekennzeichnet, dass auf der oberen Schicht (6,10) eine durchsichtige Schutzschicht (8) angebracht ist.

11. Verbundlaminat nach Anspruch 10, dadurch gekennzeichnet, dass die Schutzschicht (8) aus einem transparenten Lack besteht.

12. Verbundlaminat nach Anspruch 10, dadurch gekennzeichnet, dass die Schutzschicht aus einer Schicht aus thermoplastischen Material besteht.

13. Verbundlaminat nach Anspruch 10, dadurch gekennzeichnet, dass die Schutzschicht (8) eine Kombination aus einer Schicht aus thermoplastischen Material und einer Schicht aus transparenten Lack ist.

14. Verbundlaminat nach Anspruch 1, dadurch gekennzeichnet, dass beide Oberflächen der Zwischenschicht (4) entsprechend den Farben und Merkmalen verschiedener Holzarten bedruckt sind.

15. Verbundlaminat nach Anspruch 1, dadurch gekennzeichnet, dass die obere Schicht aus einem Lack (10) mit farbigen Pigmenten besteht.

16. Verfahren zum Dekorieren von flachen oder geformten Platten aus Holz mit dem in einem oder mehreren der Ansprüche 1 bis 15 beanspruchten thermoplastischen Verbundlaminat, dadurch gekennzeichnet, dass bevor oder nachdem das Verbundlaminat auf einer zu dekorierenden Platte angebracht ist, die obere Schicht ortlich entfernt wird bis die durchsichtige Zwischenschicht (4) erreicht ist.

17. Verfahren zum Dekorieren nach Anspruch 16, dadurch gekennzeichnet, dass das Entfernen durch eine chemische Behandlung ausgeführt wird.

18. Verfahren zum Dekorieren nach Anspruch 16, dadurch gekennzeichnet, dass das Entfernen durch eine mechanische Bearbeitung ausgeführt wird.

## Revendications

1. Un laminé continu thermoplastique composite, pour le revêtement de panneaux plats ou conformés en matériau à base de bois, caractérisé en ce qu'il comprend une couche inférieure (2) colorée dans la masse, une couche intermédiaire (4) de matériau transparent, et une couche supérieure (6,10) colorée dans la masse d'une couleur différente de celle de la couche inférieure.

2. Un laminé composite comme revendiqué en revendication 1, caractérisé en ce qu'une couche primaire est appliquée à la surface extérieure de la couche inférieure (2) pour faciliter sa fixation sur le panneau.

3. Un laminé composite comme revendiqué en revendication 1, caractérisé en ce que la couche inférieure (2) consiste en une couche de PVC.

4. Un laminé composite comme revendiqué en revendication 1, caractérisé en ce que la couche inférieure (2) consiste en une couche de polypropylène.

5. Un laminé composite comme revendiqué en revendication 1, caractérisé en ce que la couche supérieure (6,10) consiste en une couche de PVC.

6. Un laminé composite comme revendiqué en revendication 1, caractérisé en ce que la couche supérieure (6,10) consiste en une couche de polypropylène.

7. Un laminé composite comme revendiqué en revendication 1, caractérisé en ce que la couche transparente (4) est formée de matériau thermoplastique.

8. Un laminé composite comme revendiqué en revendication 1, caractérisé en ce que la couche inférieure (2) consiste en une feuille de matériau thermoformable ayant une surface imprimée pour afficher des couleurs et un grain qui reproduisent un type de bois particulier.

9. Un laminé composite comme revendiqué en revendication 1, caractérisé en ce que la couche supérieure consiste en une impression bois (6).

10. Un laminé composite comme revendiqué en revendication 9, caractérisé en ce qu'une couche transparente de protection (8) est appliquée sur la couche supérieure (6,10).

11. Un laminé composite comme revendiqué en revendication 10, caractérisé en ce que ladite couche de protection (8) est un vernis transparent.

12. Un laminé composite comme revendiqué en revendication 10, caractérisé en ce que ladite couche de protection est une feuille de matériau thermoplastique.

13. Un laminé composite comme revendiqué en revendication 10, caractérisé en ce que ladite couche de protection (8) est une combinaison d'une feuille de matériau thermoplastique et d'une couche de vernis transparent.

14. Un laminé composite comme revendiqué en revendication 1, caractérisé en ce que les deux surfaces de la couche intermédiaire (4) sont imprimées conformément aux couleurs et aux caractéristiques de différents types de bois.

15. Un laminé composite comme revendiqué en revendication 1, caractérisé en ce que la couche supérieure est en vernis pigmenté coloré (10).

16. Un procédé de décoration de panneaux plats ou conformés de matériau à base de bois avec le laminé composite thermoplastique revendiqué dans une ou plusieurs des revendications 1 à 15, caractérisé en ce qu'après ou avant que ledit laminé composite ait été appliqué sur un panneau à décorer, un retrait localisé de la couche supérieure est réalisé jusqu'à ce que la couche intermédiaire transparente (4) soit atteinte.

17. Un procédé de décoration comme revendiqué en revendication 16, caractérisé en ce que ledit retrait est effectué par traitement chimique.

18. Un procédé de décoration comme revendiqué en revendication 16, caractérisé en ce que ledit retrait est effectué par usinage mécanique.
